# FASCICULE DE BREVET EUROPEEN

(11) **EP 0 640 035 B1**
(45) Date de publication et mention de la délivrance du brevet: **23.07.1997**
(21) Numéro de dépôt: 94904209.7
(22) Date de dépôt: 07.01.1994
(51) Int. Cl.: B29C 49/28

(54) **MACHINE DE FABRICATION DE CORPS CREUX PAR SOUFFLAGE**
MASCHINE ZUR HERSTELLUNG VON BLASGEFORMTEN HOHLKÖRPERN
MACHINE FOR BLOW MOULDING HOLLOW OBJECTS

(30) Priorité: 08.01.1993 FR 9300135
(43) Date de publication de la demande: 01.03.1995
(73) Titulaire: ADS, F-95310 Saint-Ouen-l'Aumône (FR)
(72) Inventeur: DI SETTEMBRINI, Antoine, F-83220 Le Pradet (FR)
(74) Mandataire: Chambon, Gérard
(86) Numéro de dépôt international: FR9400020
(87) Numéro de publication internationale: WO9415770

(56) Documents cités:
- DE-A- 3 247 194
- FR-A- 2 510 470
- US-A- 2 792 593
- US-A- 3 850 566

## Description

L'invention concerne une machine de fabrication de corps creux par soufflage, à partir de préformes thermoplastiques. L'invention est plus particulièrement destinée à la fabrication de récipients thermoplastiques à orientation biaxiale, tels que des bouteilles ou des flacons.

Il est connu de fabriquer des bouteilles thermoplastiques à orientation biaxiale à partir de préformes obtenues, par exemple, par injection.

Une préforme se présente généralement sous la forme d'un tube fermé à une extrémité, tandis que son autre extrémité ouverte est pourvue d'une bague, éventuellement munie à sa base d'une contre-bague sous forme d'une collerette en saillie. En dehors de sa bague et de sa contre-bague, la préforme devra subir une expansion au cours d'une opération de moulage, dite d'étirage-soufflage.

Pour cela, les préformes thermoplastiques, après fabrication, doivent subir un traitement thermique approprié, antérieurement à l'opération de moulage par étirage-soufflage, afin d'amener leur matière à une bonne température de façonnage et d'orientation moléculaire. De ce traitement thermique, dépendra notamment certaines caractéristiques du produit fini, telles que résistance, transparence, etc.

Le moulage des bouteilles s'effectue généralement au moyen d'un moule qui vient enserrer chaque préforme et d'une canne d'étirage et de soufflage, qui est introduite dans la partie ouverte de ladite préforme, pour en assurer l'étirage et l'expansion par soufflage sous pression.

Les machines prévues pour ce type de fabrication se présentent, par exemple, en ligne, ce qui limite le nombre de moules dont dépendent les cadences de production.

C'est pourquoi on a imaginé des machines rotatives autorisant de meilleures cadences.

Ces machines connues sont généralement composées d'un appareil d'alimentation et de réchauffage des préformes et d'une roue pour le moulage par soufflage. L'appareil de réchauffage est, par exemple, du type à défilement rotatif et plus particulièrement encore sous la forme également d'une roue, comme par exemple la machine de moulage décrite dans FR-A-2 510 470.

Ce type d'appareil présente en outre des moyens de transfert, notamment pour transférer les préformes de l'appareil de réchauffage vers la roue de moulage, pour évacuer les produits après moulage, ou encore pour l'alimentation des préformes.

Toutefois, pour ce type d'opération, un moule et les moyens qui l'équipent sont relativement lourds et une roue munie de plusieurs moules présente une masse en mouvement très importante.

Il a aussi été imaginé dans le domaine du moulage par soufflage (sans étirage), la machine décrite dans US-A-2,792,593 qui comporte un appareil de réchauffage des préformes et un ensemble de postes de moulage disposés de manière fixe en arc de cercle.

Dans cette machine, le poste de réchauffage se présente sous la forme d'une sorte de tunnel en arc de cercle dans lequel les préformes se déplacent au moyen d'un chariot rotatif, tandis que les moules se trouvent sur un arc de cercle concentrique et de même rayon que celui décrit par les préformes.

De plus, avec une telle machine, les produits finis provenant des préformes, refroidissent dans leurs moules avant d'être convoyés à un autre poste pour être évacués.

Il est clair alors qu'il est impossible avec cette machine, d'obtenir un fonctionnement en continu et qu'en outre, le nombre de postes de moulage est très limité du fait de l'encombrement de l'appareil de réchauffage.

L'inventeur a cherché et conçu une machine à fonctionnement en continu qui bénéficie des avantages des machines rotatives, sans avoir les inconvénients des grandes masses en mouvement.

La machine selon l'invention, du type précité, et comportant donc au moins un appareil de réchauffage des préformes et un ensemble de postes de moulage disposés de manière fixe en arc de cercle est notamment remarquable en ce que les postes de moulage comportent chacun un moyen d'éjection des produits finis, tandis qu'un dispositif rotatif de transfert est prévu entre ledit appareil de réchauffage et lesdits postes de moulage pour le transfert des préformes réchauffées, le dispositif de transfert se présentant sous la forme d'une roue disposée coaxialement à l'arc de cercle sur lequel sont disposés les postes de moulage, et qui est pourvue de moyens porte-préformes régulièrement répartis sur un cercle pour prendre chacun une préforme réchauffée et pour la déposer dans un moyen de réception d'un poste de moulage.

Ainsi, les postes de moulage étant fixes, il suffit, par exemple, d'entraîner en rotation seulement des cames de commande, d'un poids négligeable, contrairement à la technique connue où les postes de moulages sont rotatifs et les cames de commandes fixes, tandis que l'on peut prévoir un grand nombre de postes de moulage et un fonctionnement en continu, contrairement au brevet US précité.

Par exemple, les moyens porte-préformes sont aménagés aux extrémités de bras disposés radialement. Toutefois, cette disposition n'est pas obligatoire et il pourrait s'agir d'un dispositif du type en étoile, par exemple.

Le dispositif de transfert comporte alors un nombre de moyens porte-préformes égal à un multiple du nombre de postes de moulage.

De préférence le dispositif de transfert est aménagé pour prendre chaque préforme une par une dans l'appareil de réchauffage, tandis qu'il les transfère toutes à la fois dans les moyens de réception des postes de moulage au moment où chaque poste de moulage se trouve devant un moyen porte-préformes du dispositif de transfert chargé d'une préforme, les opérations de moulage et d'éjection s'effectuant pendant la rotation et la mise en place d'un nouvel ensemble de moyens porte-préformes du dispositif de transfert chargés de préformes.

En outre et avantageusement, les commandes en continu et en synchronisme des postes de moulage sont effectuées au moins en partie par des cames entraînées en rotation inverse par rapport au sens de rotation du dispositif de transfert de telle sorte que les préformes sont travaillées dans l'ordre décroissant par rapport à la longueur du chemin parcouru entre l'appareil de réchauffage et le poste de moulage correspondant, pour assurer des durées de stabilisation et de conditionnement thermique sensiblement égales pour chaque préforme.

Un mode particulier de réalisation est remarquable en ce que chaque poste de moulage comporte plusieurs empreintes pour plusieurs préformes, le dispositif rotatif de transfert étant prévu pour effectuer le transfert des préformes en même temps vers tous les postes de moulage munis à cet effet de moyens de réception, mais en autant de fois qu'il y a d'empreintes dans les postes de moulage, par rotation dudit dispositif de transfert.

Si l'appareil de réchauffage peut présenter une forme quelconque, linéaire, en forme de U, ou circulaire; dans le cas d'un appareil du type à défilement rotatif, sous la forme d'une roue sur laquelle sont disposées les préformes à réchauffer et à distribuer, l'inventeur préconise que ledit appareil de réchauffage sous forme d'une roue soit positionné de manière telle que les préformes décrivent un cercle sensiblement tangent à celui décrit par les moyens porte-préformes du dispositif de tranfert et tournent en sens inverse de ce dernier.

L'invention sera bien comprise à la lecture de la description qui va suivre et qui se réfère aux dessins annexés dans lesquels:
- la figure 1 est une coupe selon A-A de la figure 2,
- la figure 2 est une vue en plan d'une machine selon l'invention.

Le mode de réalisation représenté à titre d'exemple comporte essentiellement trois dispositifs combinés: un appareil I de réchauffage, des préformes, un dispositif de transfert II et un système de transformation des préformes, ce dernier comportant un ensemble III de postes de moulage, ici, six postes 1a-1f. Dans cet exemple, chacun des six postes de moulage est équipé d'un moule à simple empreinte, mais il est clair que le nombre de postes et le nombre d'empreintes peuvent varier selon les besoins, les dispositifs I et II étant éventuellement adaptés en conséquence.

Comme le montrent bien les dessins, les postes 1a à 1f sont fixes et disposés en arc de cercle.

L'appareil de réchauffage I comporte essentiellement une roue 2 qui tourne autour d'un axe 3 dans le sens trigonométrique à l'aide, par exemple, d'un moteur 14.

La roue 2 est pourvue d'une pluralité de mandrins tels que 5 et 5', destinés à porter des préformes 6, 6' qui sont entraînées dans le même mouvement de rotation que les mandrins 5, 5' mais aussi en rotation sur elles-mêmes.

Au voisinage de la périphérie de la roue 2, sont disposés en arc de cercle à poste fixe, des fours à infrarouge tels que 7 qui sont destinés à conditionner thermiquement les préformes.

Les préformes arrivent sur la roue 2 au moyen d'un distributeur 8 aménagé pour distribuer les préformes sur deux guides 9 en sortie desquels est prévu un alimentateur en étoile 10.

De la sorte, on comprend que les préformes telles que 6, 6', provenant du distributeur 8 arrivent sur la roue 2 et défilent en tournant devant les fours tels que 7.

Toutefois, il est clair que l'appareil de réchauffage pourrait avoir une autre forme, comme déjà dit, et présenter notamment la forme d'un U.

Comme le montrent bien les dessins, le dispositif de transfert II, se présente sous la forme d'une pluralité de bras tels que 11, disposés selon les rayons d'une roue coaxiale à l'arc de cercle sur lequel sont aménagées les postes de moulage 1a-1f. Les extrémités des bras 11 sont équipées de moyens 11' porte-préformes.

On remarquera dès à présent que le nombre de bras 11 est ici le double (soit douze) du nombre de postes de moulage, mais il pourrait s'agir d'un autre multiple. Ici encore, si le mode de réalisation représenté comporte des bras, il pourrait bien sûr s'agir d'un dispositif en forme d'étoile ou autrement, les moyens 11' étant disposés sur un cercle.

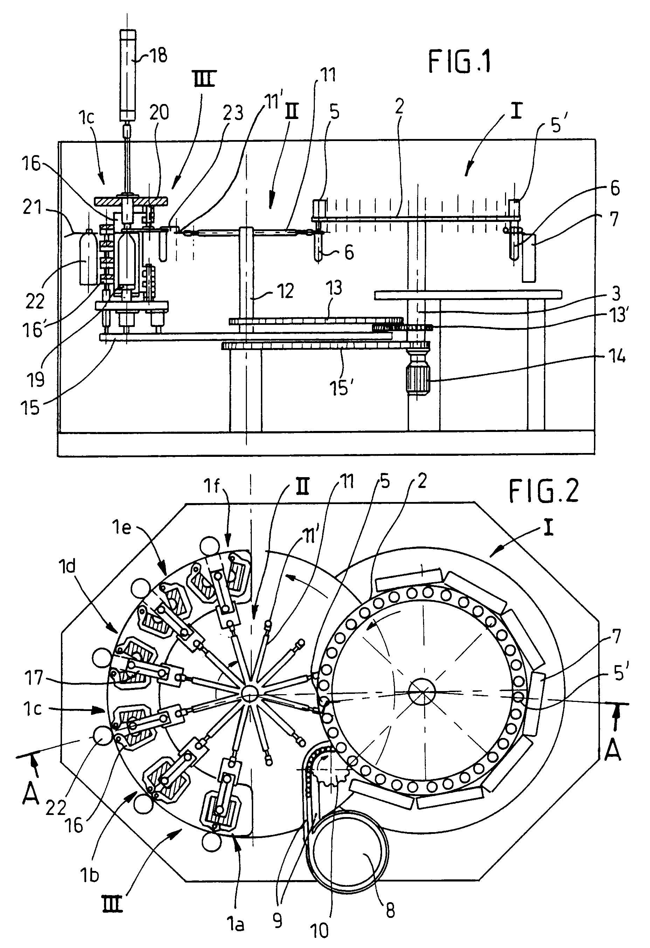

Le dispositif de transfert II est entraîné en sens inverse et en synchronisme avec la roue 2 de l'appareil de réchauffage, autour d'un axe 12, au moyen, par exemple, d'une courroie crantée 13 et d'un système d'engrenages 13' (figure 1) actionnés par l'axe 3 de la roue 2, ledit axe étant entraîné en rotation, comme déjà dit, par le moteur 14.

Des cames de commandes schématisées en 15 sont entraînées en rotation inverse des bras 11 du dispositif de transfert II et donc dans le même sens que la roue 2 de l'appareil I, par exemple par la courroie 15' (figure 1).

Les cames 15 sont destinées à commander les diverses opérations des postes de moulage 1a-1f.

Chaque poste 1a-1f comporte en effet:
- un moule 16 et son porte-moule, munis de moyens de verrouillage 16',
- une pince 17 (figure 2) de transfert simultané des bouteilles et préformes,
- un vérin de soufflage et pré-soufflage 18 (figure 1),
- un fond amovible 19,
- des plaques de support 20,
- des guides d'évacuation 21 des bouteilles finies 22,
- des moyens 23 de réception des préformes.

Etant donné que les postes de moulage sont fixes, on comprend que l'alimentation en air des vérins, le pré-soufflage et le soufflage, l'alimentation en eau pour le refroidissement, sont avantageusement simplifiés, d'où une fabrication plus simple et moins onéreuse.

Les cames 15 permettent ainsi de déclencher en continu et en synchronisme les diverses fonctions de chaque poste de moulage et notamment:
- l ouverture et la fermeture des moules 16 et des pinces 17,
- l'entraînement des mouvements de va-et-vient desdites pinces,
- le verrouillage et le déverrouillage des moyens 16' des moules 16,
- l'entraînement en va-et-vient vertical du fond amovible 19,
- la commande du vérin 18 de pré-soufflage pour l'étirement des préformes et de soufflage de celles-ci.

Le cycle de fonctionnement est maintenant simple à comprendre.

Les préformes 6, 6', ..., sont transférées du distributeur 8 vers la roue 2, via 9 et 10, et grâce aux mandrins 5, 5', ...

Ensuite, les préformes sont transférées de la roue 2 par le dispositif de transfert II muni des bras 11, vers l'ensemble III des moules.

Pour ce faire, le moyen 11' de chaque bras 11 ayant saisi une préforme viendra la positionner dans le moyen de réception 23 du poste de moulage correspondant.

Ensuite, les pinces 17 permettent de transférer les préformes dans les moules 16, tout en évacuant les produits finis 22 sur les guides d'évacuation 21 en aval desquels peut bien sûr être prévu un convoyeur ou transporteur pneumatique vers d'autres postes de stockage et/ou de traitement complémentaire.

On comprend que les bras 11 alimentent les moyens de réception 23 tous à la fois, c'est-à-dire lorsque chaque poste 1a-1f se trouve en regard d'un bras chargé d'une préforme, tandis que les opérations de moulage s'effectuent successivement d'un poste à l'autre (voir figure 2), grâce à la rotation inverse des cames 15.

De cette façon, la préforme ayant parcouru la plus grande distance entre la roue 2 et son poste de moulage sera traitée en premier, assurant ainsi pour les préformes, des temps de stabilisation et de conditionnement thermique sensiblement équivalents.

Il est clair que selon l'invention, on élimine les masses importantes en mouvement de rotation, ce qui évite une mécanique élaborée, lourde et onéreuse, avec en outre des boîtes à eau et à air rotatives.

L'invention permet aussi de réduire sensiblement le "temps mort" sur chaque cycle durant lequel le moule reste en position d'ouverture, d'où une amélioration du rendement.

De nombreuses variantes peuvent évidemment être imaginées sans sortir du cadre de l'invention. En particulier, comme déjà dit, chaque poste de moulage peut être prévu pour plusieurs préformes à la fois, nécessitant, par exemple, un chargement en plusieurs fois par rotation du dispositif de transfert II qui présentera autant de fois des bras chargés d'une préforme devant chaque poste de moulage qu'il y a d'empreintes pour chacun desdits postes avant que ne commencent pour chaque cycle les opérations de moulage proprement dit.

## Revendications

1. Machine de frabrication de corps creux par soufflage à partir de préformes thermoplastiques (6,6') et comportant au moins un appareil de réchauffage (I) des préformes, et un ensemble (III) de postes de moulage (1a,1f) disposés de manière fixe en arc de cercle, caractérisée en ce que les postes de moulage comportent chacun un moyen d'éjection des produits finis, tandis qu'un dispositif rotatif de transfert (II) est prévu entre ledit appareil de réchauffage (I) et lesdits postes de moulage (1a,1f) pour le transfert des préformes réchauffées, le dispositif de transfert (II) se présentant sous la forme d'une roue disposée coaxialement à l'arc de cercle sur lequel sont disposés les postes de moulage (III), et qui est pourvue de moyens (11') porte-préformes régulièrement répartis sur un cercle pour prendre chacun une préforme réchauffée et pour la déposer dans un moyen de réception (23) d'un poste de moulage (1a-1f).

2. Machine selon la revendication 1, caractérisée en ce que les moyens (11') porte-préformes sont aménagés aux extrémités de bras (11) disposés radialement.

3. Machine selon l'une des revendications 1 et 2, caractérisée en ce que le dispositif de transfert (II) comporte un nombre de moyens (11') porte-préformes égal à un multiple du nombre de postes de moulage (1a-1f).

4. Machine selon l'une des revendications 1 à 3, caractérisée en ce que le dispositif de transfert (II) est aménagé pour prendre chaque préforme (6,6') une par une dans l'appareil de réchauffage (I), tandis qu'il les transfère toutes à la fois dans les moyens (23) de réception des postes de moulage (III) au moment où chaque poste de moulage (1a-1f) se trouve devant un moyen (11') porte-préformes du dispositif de transfert chargé d'une préforme, les opérations de moulage et d'éjection s'effectuant pendant la rotation et la mise en place d'un nouvel ensemble de moyens porte-préformes du dispositif de transfert chargés de préformes.

5. Machine selon l'une des revendications 1 à 4, caractérisée en ce que les commandes en continu et en synchronisme des postes de moulage sont effectuées au moins en partie par des cames (15) entraînées en rotation inverse par rapport au sens de rotation du dispositif de transfert (II) de telle sorte que les préformes sont travaillées dans l'ordre décroissant par rapport à la longueur du chemin parcouru entre l'appareil de réchauffage (I) et le poste de moulage (1a-1f) correspondant, pour assurer des durées de stabilisation et de traitement thermique sensiblement égales pour chaque préforme.

6. Machine selon l'une des revendications 1 à 5, caractérisée en ce que chaque poste de moulage (1a-1f) comporte plusieurs empreintes pour plusieurs préformes, le dispositif rotatif de transfert (II) étant prévu pour effectuer le transfert des préformes vers tous les postes de moulage (1a-1f) munis à cet effet de moyens (23) de réception, mais en autant de fois qu'il y a d'empreintes dans les postes de moulage, par rotation dudit dispositif de transfert (II).

7. Machine selon l'une des revendications 1 à 6, dont l'appareil de réchauffage (I) des préformes est du type à défilement rotatif, sous la forme d'une roue sur laquelle sont disposées les préformes à réchauffer et à distribuer, caractérisée en ce que ledit appareil de réchauffage sous forme d'une roue est positionné de manière telle que les préformes décrivent un cercle sensiblement tangent à celui décrit par les moyens (11') porte-préformes du dispositif de tranfert (II) et tournent en sens inverse de ce dernier.

## Claims

1. Machine for blow-moulding hollow objects from thermoplastic preforms (6, 6') and comprising at least one heating apparatus (I) for the preforms, and an array (III) of moulding stations (1a, 1f) disposed fixed in an arc of a circle, characterised in that the moulding stations each comprise a means for ejection of the finished products, while a rotary transfer device (II) is provided between said heating apparatus (I) and said moulding stations (1a, 1f) for the transfer of the heated preforms, the transfer device (II) taking the form of a wheel disposed coaxially with the arc of the circle on which the moulding stations (III) are disposed, and which is provided with preform carrying means (11') distributed evenly along a circle in order to each pick up a heated preform and place it in a receptacle (23) of a moulding station (1a - 1f).

2. Machine according to claim 1, characterised in that the preform carrying means (11') are arranged at the ends of arms (11) disposed radially.

3. Machine according to one of claims 1 and 2, characterised in that the transfer device (II) comprises a number of preform carrying means (11') equal to a multiple of the number of moulding stations (1a - 1f).

4. Machine according to one of claims 1 to 3, characterised in that the transfer device (II) is arranged to pick up each preform (6, 6') one by one from the heating apparatus (I), while it transfers all of them at once to the receptacles (23) of the moulding stations (III) at the moment at which each moulding station (1a - 1f) is located in front of a preform carrying means (11') of the transfer device loaded with a preform, the moulding and ejection operations being effected during the rotation and positioning of a new array of preform carrying means of the transfer device loaded with preforms.

5. Machine according to one of claims 1 to 4, characterised in that the continuous and synchronised operations of the moulding stations are produced at least in part by cams (15) driven in the reverse direction of rotation in relation to the direction of rotation of the transfer device (II) such that the preforms are processed in decreasing order in relation to the length of the path covered between the heating apparatus (I) and the corresponding moulding station (1a - 1f) to ensure substantially equal stabilisation and heat treatment times for each preform.

6. Machine according to one of claims 1 to 5, characterised in that each moulding station (1a - 1f) comprises a plurality of impressions for a plurality of preforms, the rotary transfer device (II) being designed to effect the transfer of the preforms to all the moulding stations (1a - 1f) equipped to that end with receptacles (23) in a number equal to the number of impressions in the moulding stations, by rotation of said transfer device (II).

7. Machine according to one of claims 1 to 6, whose heating apparatus (I) for the preforms is of the rotary passage type in the form of a wheel on which the preforms to be heated and distributed are disposed, characterised in that said heating apparatus in the form of a wheel is positioned such that the preforms describe a circle substantially tangential to that described by the preform carrying means (11') of the transfer device (II) and turn in the opposite direction to the latter.

## Patentansprüche

1. Maschine zum Herstellen von blasgeformten Hohlkörpern aus thermoplastischen Vorformlingen (6, 6'), die wenigstens eine Heinzeinrichtung (I) zum Erwärmen der Vorformlinge und einen Satz (III) Formstationen (1a, 1f), die in einem Kreisbogen stationär angeordnet sind, aufweist, **dadurch gekennzeichnet,** daß jede Formstation ein Mittel zum Entformen der Endprodukte aufweist und eine rotierbare Transportvorrichtung (II) zwischen der Heinzeinrichtung (I) und den Formstationen (1a, 1f) für den Transport der erwärmten Vorformlinge vorgesehen ist und die Transportvorrichtung (II) die Form eines koaxial zum Kreisbogen, auf dem die Formstationen (III) angebracht sind, angeordneten Rades aufweist und mit Haltemitteln (11') für die Vorformlinge versehen ist, die auf einem Kreis gleichmäßig verteilt sind und jeweils einen erwärmten Vorformlings aufnehmen und diesen an ein Aufnahmemittel (23) einer Formstation (1a-1f) abgeben.

2. Maschine nach Anspruch 1, **dadurch gekennzeichnet,** daß die Haltemittel (11') für die Vorformlinge an den Enden von radial angeordneten Armen (11) angebracht sind.

3. Maschine nach einem der Ansprüche 1 und 2, **dadurch gekennzeichnet,** daß die Transporteinrichtung (II) mehrere Haltemittel (III) für Vorformlinge (11') aufweist, deren Anzahl einem Vielfachen der Anzahl der Formstationen (1a-1f) entspricht.

4. Maschine nach einem der Ansprüche 1 bis 3, **dadurch gekennzeichnet,** daß die Transporteinrichtung (II) so ausgebildet ist, daß sie jeden Vorformling (6, 6') einzeln in der Heizeinrichtung (1) aufnimmt, wohingegen sie alle gleichzeitig in die Aufnahmemittel (23) der Formstationen (3) in dem Moment tansferiert, in welchem jede Formstation (1a-1f) sich vor einem mit einem Vorformling versehenen Haltemittel (11') für einen Vorformling der Transporteinrichtung befindet, und die Formgebungs- und Entformungsvorgänge während der Rotation und des Positionierens eines neuen Satzes von mit Vorformingen beschickten Mitteln zum Halten der Vorformlinge der Transporteinrichtung ablaufen.

5. Maschine nach einem der Ansprüche 1 bis 4, **dadurch gekennzeichnet,** daß die kontinuierlichen und synchronen Betätigungen der Formstationen wenigstens teilweise durch Kurven (15), die in bezug auf den Drehsinn der Transportvorrichtung (II) entgegengesetzt rotiert werden, bewirkt werden derart, daß die Vorformlinge in abnehmender Folge in bezug auf die Länge des Weges zwischen der Heizeinrichtung (I) und der entsprechenden Formstation (1a-1f) bearbeitet werden, damit die Dauer der Stabilisierung und thermischen Behandlung für jeden Vorformling im wesentlichen gleich ist.

6. Maschine nach einem der Ansprüche 1 bis 5, **dadurch gekennzeichnet,** daß jede Formstation (1a-1f) mehrere Formnester für mehrere Vorformlinge aufweist und die rotierbare Transportvorrichtung (II) zum Durchführen des Transports der Vorformlinge in Richtung auf alle dazu mit Aufnahmemitteln (23) versehenen Formstationen (1a-1f) mittels Rotation der Transportvorrichtung (II), jedoch genauso oft wie Formnester in den Formstationen vorhanden sind, vorgesehen ist.

7. Maschine nach einem der Ansprüche 1 bis 6, deren Heizeinrichtung (I) für die Vorformlinge ein rotatives Vorbeilaufen beinhaltet und in Form eines Rades ausgebildet ist, auf welchem die zu erwärmenden und zuzuführenden Vorformlinge angeordnet sind, **dadurch gekennzeichnet,** daß die Heizeinrichtung in Form eines Rades derart angeordnet ist, daß die Vorformlinge einen Kreis beschreiben, der im wesentlichen tangential zu dem Kreis verläuft, der durch die Haltemittel (11') für die Vorformlinge der Transportvorrichtung (II) beschrieben wird, und in entgegengesetztem Sinn zu letzterer umlaufen.
